# EUROPEAN PATENT APPLICATION

(11) **EP 1 367 292 A2**
(43) Date of publication of application: **03.12.2003**
(21) Application number: 03011859.0
(22) Date of filing: 26.05.2003
(51) Int. Cl.: F16H 1/16

(54) **Power transmission mechanism and rotatable apparatus for vehicle equipped with the same**

(30) Priority: 29.05.2002 JP 2002155309
(71) Applicant: ICHIKOH INDUSTRIES, LTD., Tokyo 144-0022 (JP)
(72) Inventor: Ishiyama, Yoshihiko, c/o Ichikoh Industries, Ltd., Isehara-shi, Kanagawa-ken 259-1192 (JP)
(74) Representative: Grünecker, Kinkeldey, Stockmair & Schwanhäusser Anwaltssozietät

(57) **Abstract**

When the driving of a driving unit (11) is stopped, a first gear (18) and a second gear (17) restrict the rotation of a final output gear (9) in both directions. With this arrangement, it becomes possible to securely prevent the occurrence of rattling during rotation of a final output shaft due to backlash of the gears. Further, a unit that applies a torque of constant strength to the final output shaft becomes unnecessary. Consequently, it becomes possible to make compact a power transmission mechanism (1), and it also becomes possible to reduce cost.

## Description

### BACKGROUND OF THE INVENTION

### 1) Field of the Invention

The present invention relates to a power transmission mechanism that transmits power to a final output shaft. More particularly, this invention relates to a rotatable apparatus for vehicles that is equipped with the power transmission mechanism and that rotates vehicle attachments such as mirrors and lamps via the power transmission mechanism based on the power of a driving unit.

### 2) Description of the Related Art

A power transmission mechanism and a power transmission mechanism that is equipped in a rotatable apparatus for vehicles are disclosed, for example, in United States Patent Publication No. 4,787,726.

In general, a power transmission mechanism uses many gears to transmit power of a drive shaft of a driving unit to a final output shaft and to drive the final output shaft. Therefore, the power transmission mechanism has a problem that rattle (i.e., rattling during rotation) occurs easily in the final output shaft when a rotation of the final output shaft stops, due to backlash (i.e., play and clearance between tooth flanks in the meshing gears) that occurs because of many gears. In order to prevent the occurrence of this rattle, a unit that applies a constant torque to the final output shaft (i.e., resistance torque) is generally used. The rattle that occurs due to the backlash is prevented based on this unit.

However, when the unit that applies a resistance torque to the final output shaft is used, there is a risk that the resistance torque applied to the final output shaft gives load to the power transmission mechanism. In some cases, a driving unit that produces a large output is used to transmit sufficient power to the final output shaft even when the resistance torque is applied to the final output shaft. In this case, it is necessary to improve the strength of gears, bearings, and a case to match the output from the driving unit. This has a problem of bringing about an increase in the sizes of the power transmission mechanism and an increase in cost.

### SUMMARY OF THE INVENTION

It is an object of this invention to solve at least the problems in the conventional technology.

In the power transmission mechanism that transmits power of a drive shaft of a driving unit to a final output shaft according to one aspect of this invention, the power transmission mechanism includes a final output gear provided on the final output shaft, a first gear that is meshed with the final output gear, and transmits the power to the final output gear, and a second gear that is meshed with the final output gear, and transmits the power to the final output gear. The power transmission mechanism also includes a feed rate difference generating unit that generates a difference between tooth feed rates such that a tooth feed rate of the first gear is faster than a tooth feed rate of the second gear, and a torque limiter that is provided at the first gear side, and has a slip torque larger than a rated torque of the first gear.

In the power transmission mechanism that transmits power of a drive shaft of a driving unit to a final output shaft according to another aspect of this invention, the power transmission mechanism includes a case in which the drive shaft of the driving unit and the final output shaft are rotatably supported, and either one of a worm wheel and a helical gear as a final output gear provided on the final output shaft. The power transmission mechanism also includes a first worm as a first gear that is rotatably supported in the case. The first gear is meshed with either of the worm wheel and the helical gear, and transmits the power to either of the worm wheel and the helical gear. The power transmission mechanism further includes a second worm as a second gear that is rotatably supported in the case. The second gear is meshed with either of the worm wheel and the helical gear, and transmits the power to either of the worm wheel and the helical gear. The power transmission mechanism further includes a relay gear unit as a feed rate difference generating unit that is provided between the drive shaft of the driving unit, the first worm, and the second worm, and that generates a difference between tooth feed rates such that a tooth feed rate of the first worm is faster than a tooth feed rate of the second worm by making a rotational speed of the first worm faster than a rotational speed of the second worm. Both of the worms have substantially equal diameters. The power transmission mechanism further includes a torque limiter including a first friction clutch provided on one of relay gears of the relay gear unit, a second friction clutch provided on a rotation shaft of the first worm, and a spring that is provided between the relay gear and the rotation shaft of the first worm. The spring presses the first friction clutch and the second friction against each other, and the torque limiter has a slip torque larger than a rated torque of the first worm.

In the rotatable apparatus for a vehicle that rotates a vehicle attachment including a mirror and a lamp by power of a driving unit via a power transmission mechanism according to another aspect of this invention, the rotatable apparatus includes the vehicle attachment, a final output shaft that is fixed to the vehicle attachment, and rotates the vehicle attachment, and the power transmission mechanism that transmits the power of a drive shaft of the driving unit to the final output shaft. The power transmission mechanism includes a final output gear provided on the final output shaft, a first gear that is meshed with the final output gear, and transmits the power to the final output gear, and a second gear that is meshed with the final output gear, and transmits the power to the final output gear. The power transmission mechanism also includes a feed rate difference generating unit that generates a difference between tooth feed rates such that a tooth feed rate of the first gear is faster than a tooth feed rate of the second gear, and a torque limiter that is provided at the first gear side, and has a slip torque larger than a rated torque of the first gear.

The other objects, features and advantages of the present invention are specifically set forth in or will become apparent from the following detailed descriptions of the invention when read in conjunction with the accompanying drawings.

### BRIEF DESCRIPTION OF THE DRAWINGS

Fig. 1 is a cross section of a power transmission mechanism according to a first embodiment of the present invention;
Fig. 2 is an enlarged cross section of a main portion of the power transmission mechanism;
Fig. 3 is an enlarged cross section of a portion III in Fig. 2;
Fig. 4 is an enlarged cross section of a portion IV in Fig. 2;
Fig. 5 is a cross section of a power transmission mechanism according to a second embodiment of the present invention;
Fig. 6 is an enlarged cross section of a portion of the power transmission mechanism cut along a line VI-VI in Fig. 5;
Fig. 7 is an enlarged cross section of a portion of the power transmission mechanism cut along a line VII-VII in Fig. 5;
Fig. 8 is a cross section of a power transmission mechanism according to a first modification of the first embodiment;
Fig. 9 is a cross section of a power transmission mechanism according to a second modification of the first embodiment;
Fig. 10 is a cross section of a power transmission mechanism according to a third modification of the first embodiment;
Fig. 11 is a cross section of a power transmission mechanism according to a fourth modification of the first embodiment;
Fig. 12 is a cross section of a power transmission mechanism according to a fifth modification of the first embodiment; and
Fig. 13 is a perspective view of a rotatable apparatus for vehicles equipped with the power transmission mechanism according to the present invention.

### DETAILED DESCRIPTION

Exemplary embodiments of the power transmission mechanism according to the present invention and the rotatable apparatus for vehicles equipped with the power transmission mechanism according to the present invention will be explained below with reference to the accompanying drawings. The present invention is not limited to these embodiments.

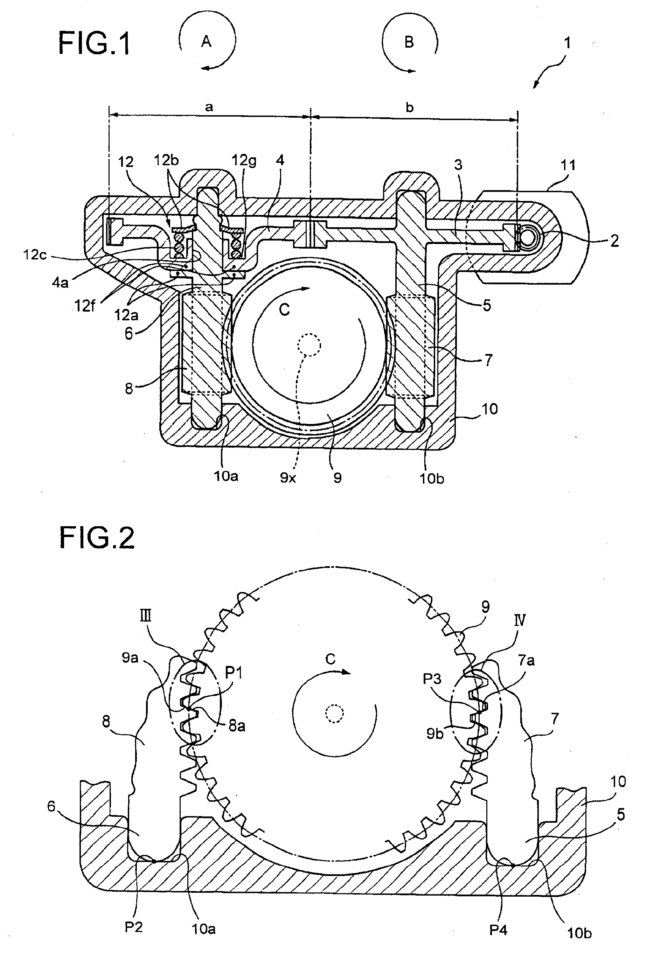

Each of Fig. 1 to Fig. 4 illustrates the power transmission mechanism according to a first embodiment of the present invention.

In the figures, a reference numeral 1 denotes the power transmission mechanism. The power transmission mechanism 1 includes a case 10, and a motor 11 as a driving unit. A worm 2 that rotates along the power (i.e., the rotation of an output shaft) of a drive shaft (not shown) of the motor 11 is rotatably provided in the case 10. Concave bearings 10a and 10b are also provided in the case 10. A second shaft (i.e., a damping shaft) 5 and a first shaft (i.e., a drive shaft) 6 are rotatably provided in parallel with each other in the bearings 10a and 10b respectively. The second shaft 5 is formed with a helical gear (i.e., a worm wheel) 3 as a second relay gear that rotates by being meshed with the worm 2. On the other hand, the first shaft 6 is fitted with a helical gear (i.e., a worm wheel) 4 that rotates by being meshed with the second relay gear 3, via a torque limiter 12. The helical gear 4 is formed as a first relay gear. A diameter "a" of the first relay gear 4 is slightly smaller than a diameter "b" of the second relay gear 3 (a < b). As the first relay gear 4 rotates by being meshed with the second relay gear 3, the first relay gear 4 rotates slightly faster than the second relay gear 3.

As explained above, the first relay gear 4 and the second relay gear 3 constitute a relay gear unit as a feed rate difference generating unit that generates a difference between tooth feed rates ("feed rate") such that a feed rate of a first worm 8 explained later is faster than a feed rate of a second worm 7 explained later. Note that a term "tooth" of the tooth feed rate here indicates a tooth flank.

The second shaft 5 is provided with the second worm 7 as a second gear that integrally rotates with the second relay gear 3. The first shaft 6 is provided with the first worm 8 as a first gear that faces the second worm 7. The second worm 7 and the first worm 8 are cylindrical worms having the same diameters, and their tooth torsion directions are the same. The teeth may have a torsion in the right direction or in the left direction. In the present example, the torsion is in the right direction. A final output gear 9 of a helical gear provided in a final output shaft 9x is positioned between the second worm 7 and the first worm 8. The final output gear 9 is meshed with the second worm 7 and the first worm 8 respectively. The final output shaft 9x is rotatably supported by the case 10.

The torque limiter 12 includes a friction clutch 12a that is formed in a flange shape on the first shaft 6, a friction clutch 12f formed in a concave shape on the first relay gear 4, a spring bearing 12b fixed to the first shaft 6, a spring bearing recess 12g provided on the first relay gear 4, and a coil spring 12c disposed in a compressed state between the spring bearing 12b and the spring bearing recess 12g. In other words, at the center of the first relay gear 4, a through-hole 4a through which the first shaft 6 passes is formed. The spring bearing recess 12g is provided on the concentric circle with the through-hole 4a.

In the torque limiter 12, the spring force of the coil spring 12c disposed in a compressed state between the spring bearing 12b and the spring bearing recess 12g allows the friction clutch 12f of the first relay gear 4 and the friction clutch 12a of the first worm 8 to be brought in contact with each other with pressure. As a result, the friction clutch 12a and the coil spring 12c of the first worm 8 sandwich the friction clutch 12f and the spring bearing recess 12g of the first relay gear 4, thereby to prevent the first relay gear 4 from being slipped.

The torque limiter 12 slips the first relay gear 4 along the first shaft 6 when a difference between the torque of the first relay gear 4 and the torque of the first shaft 6 becomes at least a predetermined value. A torque of the first relay gear 4 to the first shaft 6 when the slip rotation occurs, that is, a slip torque Ts of the torque limiter 12 is larger than a rated torque Tw that is necessary to rotate the final output gear 9 with the first worm 8. Therefore, when the first worm 8 is rotated to drive the final output gear 9 that is stationary, it is possible to avoid such a situation that the torque limiter 12 becomes slippery to fail the transmission of the driving force of the motor 11 to the first worm 8.

The operation of the power transmission mechanism 1 having the above structure will be explained next.

When the drive shaft of the motor 11 rotates to rotate the worm 2, the second relay gear 3 and the first relay gear 4 rotate based on the rotation of the worm 2. As the first relay gear 4 is meshed with the second relay gear 3, the first relay gear 4 and the second relay gear 3 rotate in mutually opposite directions. For example, as shown in Fig. 1, when the second relay gear 3 rotates in the direction of an arrow B, the first relay gear 4 rotates in the direction of an arrow A.

When the second relay gear 3 and the first relay gear 4 rotate, the second shaft 5 and the first shaft 6 rotate, which causes the second worm 7 and the first worm 8 to rotate. The teeth of the second worm 7 and the first worm 8 are formed in the right torsion direction. Therefore, when the second worm 7 rotates in the direction of B and the first worm 8 rotates in the direction of A, the final output gear 9 is rotated in the direction of an arrow C based on the rotations of the second worm 7 and the first worm 8.

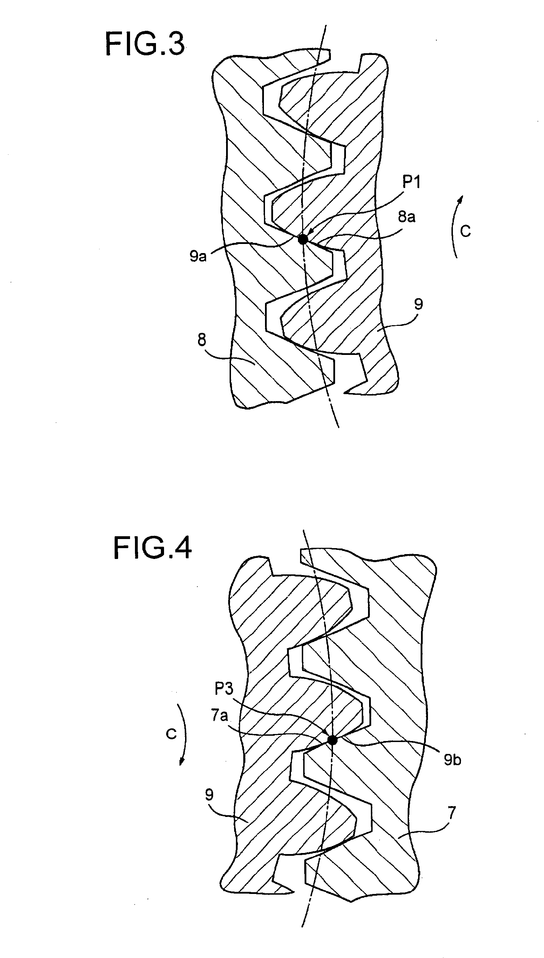

At the starting time of the motor 11, the first worm 8 having a fast feed rate rotates the final output gear 9. Therefore, as shown in Fig. 2 and Fig. 3, the tooth flank 8a of the first worm 8 is in the state of being brought into contact with the back tooth flank 9a of the final output gear 9 in its rotating direction. The first worm 8 transmits the driving force to drive the final output gear 9 to the final output gear 9 at a contact point (i.e., a load center) P1 between the tooth flank 9a and the tooth flank 8a, and rotates the final output gear 9 in the direction of C. Reaction force to the driving force that is applied to the final output gear 9 at the load center P1 is given to the first worm 8 at a contact point (i.e., a load center) P2 between the first shaft 6 and the bearing 10a of the case 10.

On the other hand, as the first relay gear 4 rotates slightly faster than the second relay gear 3, the rotational speed of the first worm 8 is slightly faster than the rotational speed of the second worm 7. Therefore, the rotation quantity per unit time of the final output gear 9 that is driven by the first worm 8 becomes slightly larger than the rotation quantity per unit time of the final output gear 9 driven by the second worm 7. In other words, the feed rate of the final output gear 9 rotated by the first worm 8 becomes faster than the feed rate of the second worm 7.

As shown in Fig. 4, the fore tooth flank 9b of the final output gear 9 in its rotating direction is in the state of being brought into contact with the tooth flank 7a of the second worm 7. The rotation force of the final output gear 9 is applied to the second worm 7 at a contact point (i.e., a load center) P3 between the tooth flank 9b and the tooth flank 7a. The rotation force applied to the second worm 7 is applied to a contact point (i.e., a load center) P4 between the second shaft 5 and the bearing 10b of the case 10. The above state works momentarily at the starting time of the motor 11.

However, the self-locking function (i.e., the function of locking the second relay gear 3, the worm 2, and the motor 11) works on the second worm 7. Therefore, even when the rotation force of the final output gear 9 is applied to the second worm 7, the second worm 7 cannot increase the feed rate (i.e., the rotational speed) based on this rotation force. Consequently, the rotation force that is applied to the second worm 7 at the load center P3 is transmitted to the first worm 8 as reaction force via the load center P1.

The first worm 8 receives the rotation force applied thereto at the load center P1. Therefore, load is generated, which generates damping torque in the first shaft 6 via the first worm 8. When the load applied to the first worm 8 increases, a difference between the damping torque applied to the first shaft 6 and the drive torque applied to the relay gear 4 reaches the slip torque Ts. At this time, the torque limiter 12 slips. Such slipping causes the first relay gear 4 to spin in a state that the tooth flank 8a and the tooth flank 9a are brought into contact with each other. Consequently, the feed rate of the first worm 8 is lowered to the feed rate of the second worm 7, and the first worm 8 and the second worm 7 rotate the final output gear 9.

As explained above, the first worm 8 applies the driving force to the final output gear 9 in the state that the back tooth flank 9a of the final output gear 9 in its rotating direction is brought into contact with the tooth flank 8a of the first worm 8. On the other hand, the fore tooth flank 9b of the final output gear 9 in its rotating direction is brought into contact with the tooth flank 7a of the second worm 7. The rotational speed of the first worm 8 restricts the rotational speed of the final output gear 9. Therefore, the tooth flank 8a of the first worm 8 is always brought into contact with the tooth flank 9a of the final output gear 9, and the tooth flank 9b is brought into contact with the tooth flank 7a of the second worm 7. This state works at the time of driving the motor 11.

When the driving of the motor 11 stops, the first worm 8, the second worm 7, and the final output gear 9 stop rotating. This stop maintains the state that the tooth flank 8a of the first worm 8 is in contact with the back tooth flank 9a of the final output gear 9 in its rotating direction, and the state that the fore tooth flank 9b of the final output gear 9 in its rotating direction is in contact with the tooth flank 7a of the second worm 7. This maintained state restricts the rotation of the final output gear 9 in both directions by the first worm 8 and the second worm 7. With this arrangement, it becomes possible to securely prevent the occurrence of the rattling during rotation of the final output shaft 9x due to the backlash of the gears.

Based on the ensured prevention of the rattling during rotation of the final output shaft 9x, a unit that applies a resistance torque to the final output shaft 9x becomes unnecessary. Therefore, it becomes possible to solve the problem of applying load to the transmission mechanism based on the resistance torque applied to the final output shaft 9x. Further, it is not necessary to improve the strength of the gears, the bearings, and the case. Consequently, it becomes possible to make compact the power transmission mechanism, and it also becomes possible to reduce cost.

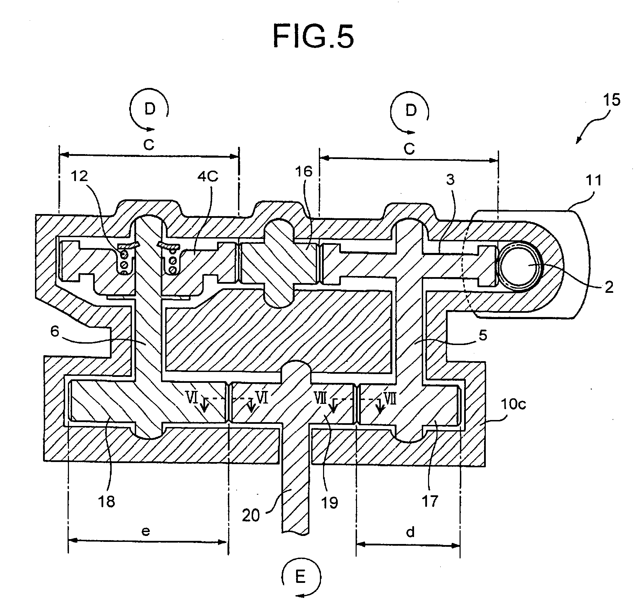

Each of Fig. 5 to Fig. 7 illustrates a power transmission mechanism according to a second embodiment of the present invention. In these figures, the same reference numerals are assigned to those corresponding the portions in Fig. 1 to Fig. 4.

In the figures, a reference numeral 15 denotes a power transmission mechanism according to the second embodiment. As shown in Fig. 5, the power transmission mechanism 15 includes the worm 2 that rotates according to the driving force of the motor 11, the second relay gear 3 as a helical gear (i.e., a worm wheel) that is meshed with the worm 2, a third relay gear 16 as a helical gear that rotates by being meshed with the second relay gear 3, a first relay gear 4c meshed with the third relay gear 16, the second shaft 5 of the second relay gear 3, the first shaft 6 of the first relay gear 4c, a second spur gear 17 as a second gear provided in the second shaft 5, a first spur gear 18 as a first gear provided in the first shaft 6, a spur gear final output gear 19 meshed with the second spur gear 17 and the first spur gear 18 respectively, and a case 10c that accommodates these parts.

The second relay gear 3 is formed on the second shaft 5, and the first relay gear 4c is provided on the first shaft 6 via the torque limiter 12. The second relay gear 3, the third relay gear 16, and the first relay gear 4c are positioned on the same plane. A diameter "c" of the first relay gear 4c is substantially the same as the diameter "c" of the second relay gear 3.

The final output gear 19 is formed on a final output shaft 20, and is positioned between the second shaft 5 and the first shaft 6. The second spur gear 17 and the first spur gear 18 are disposed opposite to each other on the second shaft 5 and the first shaft 6 respectively to sandwich the final output gear 19 so that the second spur gear 17 and the first spur gear 18 are meshed with the final output gear 19 respectively. A diameter "d" of the second spur gear 17 is slightly smaller than a diameter "e" of the first spur gear 18 (d < e).

In the power transmission mechanism 15 having the above structure, the worm 2 rotates based on the rotation of the drive shaft of the motor 11. The second relay gear 3, the third relay gear 16, and the first relay gear 4c rotate based on the rotation of the worm 2. The diameter "c" of the first relay gear 4c is the same as the diameter "c" of the second relay gear 3. The first relay gear 4c is meshed with the second relay gear 3 via the third relay gear 16. Therefore, the first relay gear 4c and the second relay gear 3 rotate in the same direction at the same rotational speed. As shown in Fig. 5, when the second relay gear 3 rotates in the direction of an arrow D, the first relay gear 4c also rotates in the direction of the arrow D.

When the second relay gear 3 and the first relay gear 4c rotate, the second shaft 5 and the first shaft 6 rotate. Based on the rotations of the second shaft 5 and the first shaft 6, the second spur gear 17 and the first spur gear 18 rotate in the same direction at the same rotational speed, thereby to rotate the final output gear 19 in the direction of an arrow E.

The diameter "d" of the second spur gear 17 is slightly smaller than the diameter "e" of the first spur gear 18 (d < e). Further, the second spur gear 17 and the first spur gear 18 rotate in the same direction at the same rotational speed. Therefore, the rotation quantity per unit time of the final output gear 19 rotated by the rotation of the first spur gear 18 having the large diameter becomes slightly larger than the rotation quantity per unit time of the final output gear 19 rotated by the rotation of the second spur gear 17 having the small diameter. In other words, the feed rate of the first spur gear 18 is faster than the feed rate of the second spur gear 17.

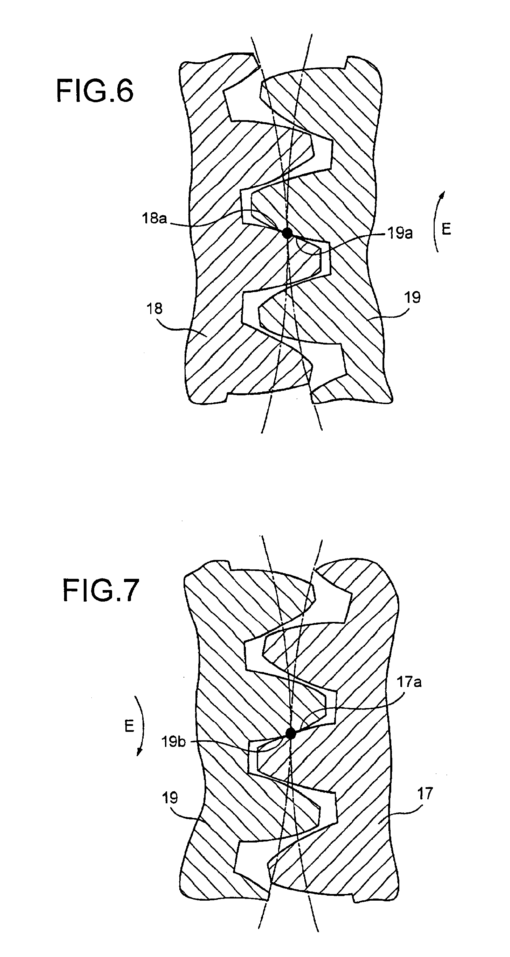

Based on the above operation, as shown in Fig. 6, when the motor 11 is stationary or the like, a back tooth flank 19a of the final output gear 19 in its rotating direction comes in contact with a tooth flank 18a of the first spur gear 18, in a similar manner to that of the first embodiment. On the other hand, as shown in Fig. 7, a fore tooth flank 19b of the final output gear 19 in its rotating direction comes in contact with a tooth flank 17a of the second spur gear 17. Therefore, the final output gear 19 can keep the state of being in contact with the second spur gear 17 and the first spur gear 18 respectively. Consequently, it becomes possible to prevent the occurrence of rattling due to backlash.

It is also possible to solve the problem of applying load to the power transmission mechanism based on the resistance torque applied to the final output shaft 20, in a similar manner to that of the first embodiment. Further, it is not necessary to improve the strength of the gears, the bearings, and the case. Consequently, it becomes possible to make compact the power transmission mechanism, and it also becomes possible to reduce cost.

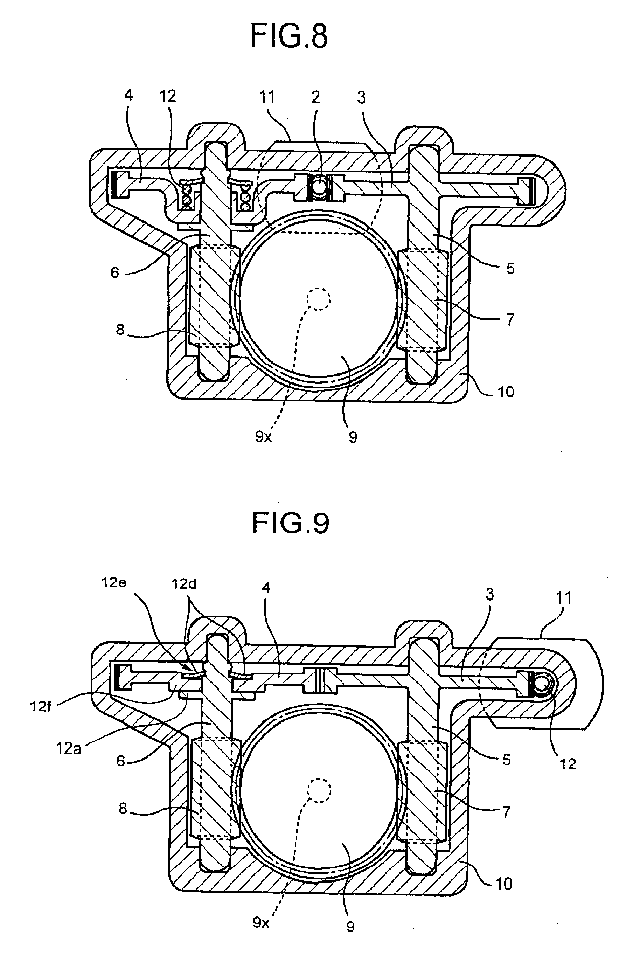

Fig. 8 illustrates a power transmission mechanism according to a first modification of the first embodiment. In Fig. 8, reference numerals identical with those in Fig. 1 to Fig. 7 denote the same portions. The power transmission mechanism according to the first modification has a structure that the worm 2 of the drive shaft of the motor 11 is meshed with the second relay gear 3 and the first relay gear 4 between the gears 3 and 4 in the power transmission mechanism 1 of the first embodiment.

Fig. 9 illustrates a power transmission mechanism according to a second modification of the first embodiment. In Fig. 9, reference numerals identical with those in Fig. 1 to Fig. 8 denote the same portions. The power transmission mechanism according to the second modification has a torque limiter 12e that compresses the friction clutch 12a of the first shaft 6 and the friction clutch 12f of the first relay gear 4 with a plate spring 12d provided between the first shaft 6 and the first relay gear 4.

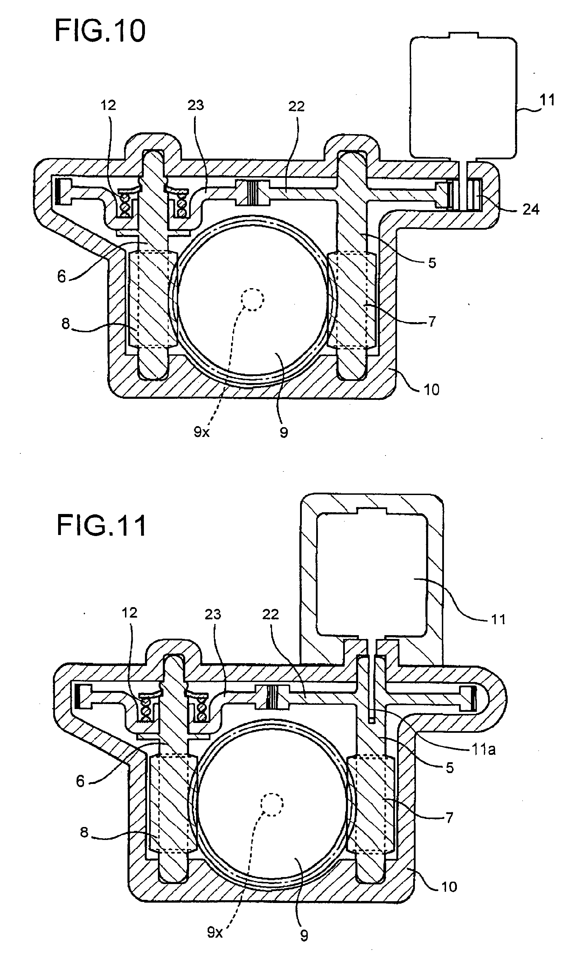

Fig. 10 illustrates a power transmission mechanism according to a third modification of the first embodiment. In Fig. 10, reference numerals identical with those in Fig. 1 to Fig. 9 denote the same portions. The power transmission mechanism according to the third modification has a structure that a first relay gear 23 as a spur gear ("first spur gear relay gear") and a second relay gear 22 as a spur gear ("second spur gear relay gear") are used, and a pinion 24 is provided on the drive shaft of the motor 11 in the power transmission mechanism 1 of the first embodiment. This pinion 24 rotates the second spur gear relay gear 22 and the first spur gear relay gear 23.

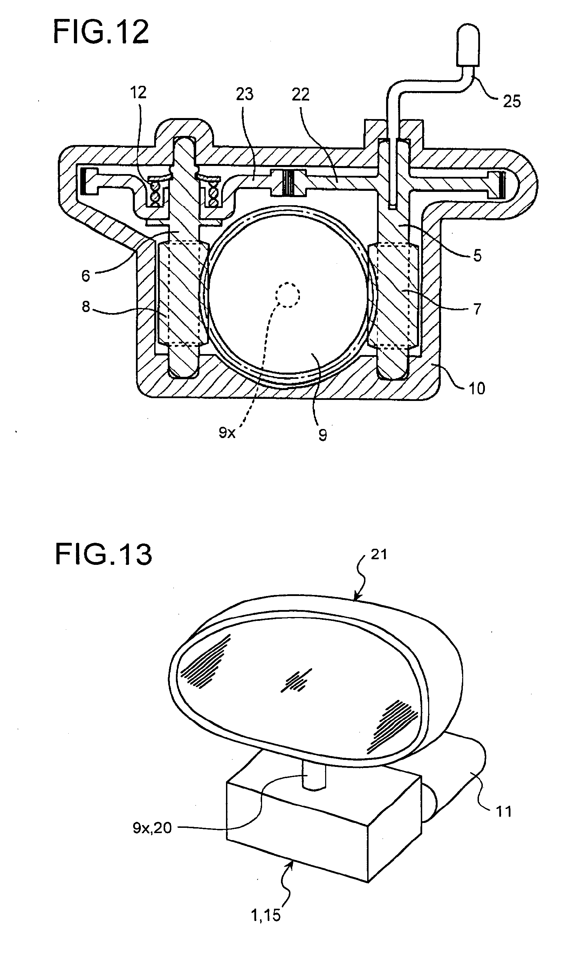

Fig. 11 illustrates a power transmission mechanism according to a fourth modification of the first embodiment. In Fig. 11, reference numerals identical with those in Fig. 1 to Fig. 10 denote the same portions. The power transmission mechanism according to the fourth modification has such a structure that the drive shaft 11a of the motor 11 is directly coupled with the second shaft 5 in the third modification.

Fig. 12 illustrates a power transmission mechanism according to a fifth modification of the first embodiment. In Fig. 12, reference numerals identical with those in Fig. 1 to Fig. 11 denote the same portions. The power transmission mechanism according to the fifth modification has such a structure that a handle 25 is provided on the second shaft 5 instead of using the motor 11 in the structure of the third modification, and the second spur gear relay gear 22 and the first spur gear relay gear 23 are manually rotated.

Fig. 13 illustrates an embodiment of a rotatable apparatus for a vehicle equipped with the power transmission mechanism according to the present invention. In Fig. 13, reference numerals identical with those in Fig. 1 to Fig. 12 denote the same portions.

In Fig. 13, a reference numeral 21 denotes a motor-driven retractable mirror apparatus as a vehicle attachment. The mirror apparatus 21 is fixed with the final output shafts 9x and 20 of the power transmission mechanisms 1 and 15 respectively. When a switch not shown is operated to drive the motor 11, the driving force of the motor 11 is transmitted to the mirror apparatus 21 via the power transmission mechanisms 1 and 15. The mirror apparatus 21 rotates between a used position and a retracted position, and stops at predetermined positions (i.e., the used position and the retracted position) based on a stop switch, not shown.

Consequently, the rotatable apparatus for vehicles equipped with the power transmission mechanism according to the first embodiment can prevent the occurrence of rattling due to backlash of the final output shafts 9x and 20 of the power transmission mechanisms 1 and 15 respectively as explained above. Based on this, it is possible to securely prevent the occurrence of vibration of the mirror apparatus 21 due to the vibration of the vehicle. As a result, the visibility of the mirror improves, which can contribute to traffic safety.

The rotatable apparatus for vehicles may be other apparatuses than the motor-driven retractable mirror apparatus 21. For example, the rotatable apparatus may be a lamp that rotates according to a steering angle of the steering wheel.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A power transmission mechanism (1) that transmits power of a drive shaft of a driving unit (11) to a final output shaft, the power transmission mechanism comprising:
a final output gear (9) provided on the final output shaft;
a first gear (18) that is meshed with the final output gear, and transmits the power to the final output gear;
a second gear (17) that is meshed with the final output gear, and transmits the power to the final output gear;
a feed rate difference generating unit that generates a difference between tooth feed rates such that a tooth feed rate of the first gear is faster than a tooth feed rate of the second gear; and
a torque limiter (12) that is provided between the first gear and the drive shaft, and has a slip torque larger than a rated torque of the first gear.

2. The power transmission mechanism (1) according to claim 1, wherein
the final output gear (9) is either one of a worm wheel and a helical gear, and
the first gear (18) and the second gear are worms, and the first gear and the second gear being meshed with either one of the worm wheel and the helical gear.

3. The power transmission mechanism (1) according to claim 1, wherein a diameter of the first gear (18) and a diameter of the second gear (17) are substantially equal to each other, and
the feed rate difference generating unit has a relay gear unit provided between the first gear and the second gear, the relay gear is configured to generate a difference between tooth feed rates by making a rotational speed of the first gear faster than a rotational speed of the second gear.

4. The power transmission mechanism (1) according to claim 1, wherein the feed rate difference generating unit has a relay gear unit provided between the first gear (18) and the second gear,
a rotational speed of the first gear and a rotational speed of the second gear are substantially equal to each other because of the relay gear unit,
a difference between tooth feed rates is generated by making a diameter of the first gear larger than a diameter of the second gear.

5. The power transmission mechanism (1) according to claim 1, wherein the feed rate difference generating unit has a relay gear unit provided between the first gear (18) and the second gear, and
a difference between tooth feed rates is generated by making a rotational speed of the first gear faster than a rotational speed of the second gear, and by making a diameter of the first gear larger than a diameter of the second gear.

6. The power transmission mechanism (1) according to claim 1, wherein
the torque limiter (12) includes
a first friction clutch provided on one of relay gears of the relay gear unit that is provided between the first gear and the second gear;
a second friction clutch provided on a rotation shaft of the first gear; and
a spring that is provided between the relay gear and the rotation shaft of the first gear, and presses the first friction clutch and the second friction against each other.

7. A power transmission mechanism (1) that transmits power of a drive shaft of a driving unit to a final output shaft, the power transmission mechanism comprising:
a case (10) in which the drive shaft of the driving unit and the final output shaft are rotatably supported;
either one of a worm wheel and a helical gear as a final output gear (9) provided on the final output shaft;
a first worm as a first gear (18) that is rotatably supported in the case, meshed with either of the worm wheel and the helical gear, and that transmits the power to either of the worm wheel and the helical gear;
a second worm as a second gear (17) that is rotatably supported in the case, meshed with either of the worm wheel and the helical gear, and that transmits the power to either of the worm wheel and the helical gear;
a relay gear unit as a feed rate difference generating unit that is provided between the drive shaft of the driving unit, the first worm, and the second worm, and that generates a difference between tooth feed rates such that a tooth feed rate of the first worm is faster than a tooth feed rate of the second worm by making a rotational speed of the first worm faster than a rotational speed of the second worm, wherein both of the worms have substantially equal diameters; and
a torque limiter (12) that includes
a first friction clutch provided on one of relay gears of the relay gear unit.
a second friction clutch provided on a rotation shaft of the first worm, and
a spring that is provided between the relay gear and the rotation shaft of the first worm, and presses the first friction clutch and the second friction clutch against each other, the torque limiter having a slip torque larger than a rated torque of the first worm.

8. The power transmission mechanism (1) according to claim 7, wherein
the driving unit (11) is a motor,
the final output gear (9) is a helical gear,
the first gear (18) and the second gear are the first worm and the second worm that have substantially equal diameters,
the relay gear unit includes
a second relay gear (3) of the helical gear that is provided simultaneously with the second worm and is meshed with the worm provided on the drive shaft of the motor, and
a first relay gear (4) of the helical gear that is provided simultaneously with the first worm and is meshed with the second relay gear, a diameter of the first relay gear is set smaller than a diameter of the second relay gear, and rotational speeds of the first relay gear and the first worm respectively are set faster than rotational speeds of the second relay gear and the second worm respectively, and
a torque limiter (12) includes
the first friction clutch provided on the first relay gear,
the second friction clutch provided on the rotation shaft of the first worm, and
a coil spring (12c) that is provided between a spring bearing provided on the first relay gear and a spring bearing provided on a rotation shaft of the first worm, and presses the first friction clutch and the second friction against each other, the torque limiter having a slip torque larger than a rated torque of the first worm.

9. A rotatable apparatus for a vehicle that rotates a vehicle attachment including a mirror and a headlamp by power of a driving unit via a power transmission mechanism (1), the rotatable apparatus comprising:
a final output shaft that is fixed to the vehicle attachment, and rotates the vehicle attachment; and
the power transmission mechanism that transmits the power of a drive shaft of the driving unit to the final output shaft, wherein
the power transmission mechanism includes
a final output gear (9) provided on the final output shaft,
a first gear (18) that is meshed with the final output gear, and transmits the power to the final output gear,
a second gear (17) that is meshed with the final output gear, and transmits the power to the final output gear,
a feed rate difference generating unit that generates a difference between tooth feed rates such that a tooth feed rate of the first gear is faster than a tooth feed rate of the second gear, and
a torque limiter (12) that is provided at the first gear side, and has a slip torque larger than a rated torque of the first gear.

10. The rotatable apparatus according to claim 9, wherein
the final output gear (9) is either one of a worm wheel and a helical gear, and
the first gear (18) and the second gear (17) are respectively worms, the first gear and the second gear being meshed with either one of the worm wheel and the helical gear.

11. The rotatable apparatus according to claim 9, wherein a diameter of the first gear (18) and a diameter of the second gear (17) are substantially equal to each other, and
the feed rate difference generating unit has a relay gear unit provided between the first gear and the second gear, the relay gear is configured to generate a difference between tooth feed rates by making a rotational speed of the first gear faster than a rotational speed of the second gear.

12. The rotatable apparatus according to claim 9, wherein the feed rate difference generating unit has a relay gear unit provided between the first gear (18) and the second gear (17),
a rotational speed of the first gear and a rotational speed of the second gear are substantially equal to each other because of the relay gear unit,
a difference between tooth feed rates is generated by making a diameter of the first gear larger than a diameter of the second gear.

13. The rotatable apparatus for vehicles according to claim 9, wherein the feed rate difference generating unit has a relay gear unit provided between the first gear (18) and the second gear (17), and
a difference between tooth feed rates is generated by making a rotational speed of the first gear faster than a rotational speed of the second gear, and by making a diameter of the first gear larger than a diameter of the second gear.

14. The rotatable apparatus according to claim 9, wherein
the torque limiter (12) includes
a first friction clutch provided on one of relay gears of the relay gear unit that is provided between the first gear (18) and the second gear (17);
a second friction clutch provided on a rotation shaft of the first gear; and
a spring that is provided between the relay gear and the rotation shaft of the first gear, and presses the first friction clutch and the second friction against each other.
